# EUROPEAN PATENT APPLICATION

(11) **EP 4 671 587 A1**
(43) Date of publication of application: **31.12.2025**
(21) Application number: 25183642.5
(22) Date of filing: 18.06.2025
(51) Int. Cl.: F16L 11/127, F16L 35/00

(54) **FLEXIBLE HOSE WITH INDICATORS FOR SIGNALLING DETERIORATION AND IMMINENT RUPTURES**

(30) Priority: 25.06.2024 IT 202400014572
(71) Applicant: D'Ottavio,, Dario, 35030 Selvazzano (PD) (IT)
(72) Inventor: D'Ottavio,, Dario, 35030 Selvazzano (PD) (IT)
(74) Representative: Rocchetto, Elena

(57) **Abstract**

The invention is a new flexible hose (T) comprising a tubular layer (P) made of plastic or rubber or silicone material, and comprising several metal electrical conductors arranged parallel to one another and to the axis of said flexible hose (T), and wherein the interruption of at least one of said metal electrical conductors (F1, F2, ... Fn), in case of excessive expansion of the flexible hose, is suited to signal the deterioration and imminent rupture of the flexible hose. Said conductors are exposed in the cross section of the terminal parts of the flexible hose and can be placed in contact with two terminal elements provided with electrical contacts for electrically connecting two conductors positioned side by side and thus achieving the electrical continuity of all the metal electrical conductors of the flexible hose. Intermediate devices can be provided for connecting a terminal of the first flexible hose with the terminals of the adjacent flexible hoses as well as with the power source and the control system.

## Description

The present patent concerns flexible hoses for liquids or fluids in general, and in particular it concerns a new flexible hose equipped with indicators suited to signal deterioration and imminent ruptures and with a related device for monitoring said deterioration and imminent rupture indicators.

Hydraulic ducts are widely used in connections between hydraulic pumps and hydraulic pistons.

Rigid pipes, typically metal pipes are preferable, but in some applications, where the route of the hydraulic duct changes, flexible hydraulic hoses are required.

Flexible hydraulic hoses consist of sections of a pipe made of plastic, silicone or rubber inside which, in order to increase their strength, there is generally a layer of rope and, if necessary, of steel braid, at the ends of which a metal coupling is attached to fix the flexible hose to the pump, the hydraulic piston, the diverter and distribution valves or other rigid pipe sections.

In less demanding situations, single-layer plastic, silicone or rubber flexible hoses are used, which are made of a single type of plastic, silicone or rubber material.

In the case of more demanding situations or uses such as, for example, in machine tools, single-layer or multilayer flexible hoses are used, whose innermost material is designed to resist the chemical and thermal characteristics of the fluid flowing therein, while the outermost layer is designed to resist shocks, weather agents, and the extreme temperatures of the environment of use.

Over time, bending stresses, exposure to the pressurized internal fluid, sunlight, and temperature variations cause the plastic, silicone or rubber material of which the flexible hose is made to deteriorate.

The first effects of such deterioration are the loss of elasticity and the cracking of the plastic, silicone or rubber material.

If not found in time, said deformations of the plastic, silicone or rubber flexible hose lead to its sudden rupture and to the leakage of the pressurized fluid with consequent loss of pressure in the hydraulic system, spreading of the pressurized fluid in the area around the point of rupture of the hose, and other direct and consequential inconveniences.

It is not always possible to inspect all the flexible hoses made of plastic, silicone or rubber such as, for example, the hydraulic brake pipes of cars or pipes behind protective covers.

In order to overcome all of the above-mentioned drawbacks, a new flexible hose for liquids or fluids in general has been designed and manufactured, which is equipped with indicators suited to signal deterioration and imminent ruptures and with a related device for monitoring said deterioration and imminent rupture indicators.

The object of the present invention is to provide flexible hoses made of plastic or silicone or rubber material and provided with electrical conductors connected to each other in series in such a way as to achieve electrical continuity, and wherein, in the event of excessive deformation, said continuity is interrupted, signalling a possible failure, danger or damage.

The new flexible hose comprises one or more concentric layers of plastic, silicone or rubber material and a series of metal conductors incorporated in at least one of said layers of plastic, silicone or rubber material.

Said one or more layers of plastic, silicone or rubber material form a pipe suited to convey fluid under pressure or negative pressure, for example air.

Said metal conductors are arranged parallel to one another over the length of the plastic, silicone or rubber hose and are equally distributed along the circumference of the cross section of the hose.

According to the preferred solution, said metal conductors are arranged in proximity to the outer surface of the hose.

Any deterioration and imminent ruptures of the hose are detected by checking the electrical continuity of each metal wire between the two ends of the hose.

When the hose begins to deteriorate, cracks and fissures appear on its outer layer, or it loses its resistance to pressure and expands at one or more points where its inner cross section and outer circumference increase.

In both cases, one or more metal conductors present within the thickness of the plastic or rubber or silicone hose are interrupted, thus interrupting the electrical continuity between the two ends of the wire itself.

According to the invention, said electrical continuity of the metal conductors of the new hose (T) can be verified by means of a lighting body connected in series to said electrical contacts and possibly with an electrical device, for example a relay, suited to keep said lighting body switched off in the presence of current and to switch it on in the absence of current.

In view of the linear configuration of the hose made of plastic, silicone or rubber material and of the linear configuration of said metal conductors present within its thickness, it is possible to manufacture the hose equipped with the electrical conductors in a continuous cycle and to cut it orthogonally to the required length. In order to make it easier to illustrate the invention, the following description makes reference to the attached drawings, which represent non-limiting examples of embodiment.

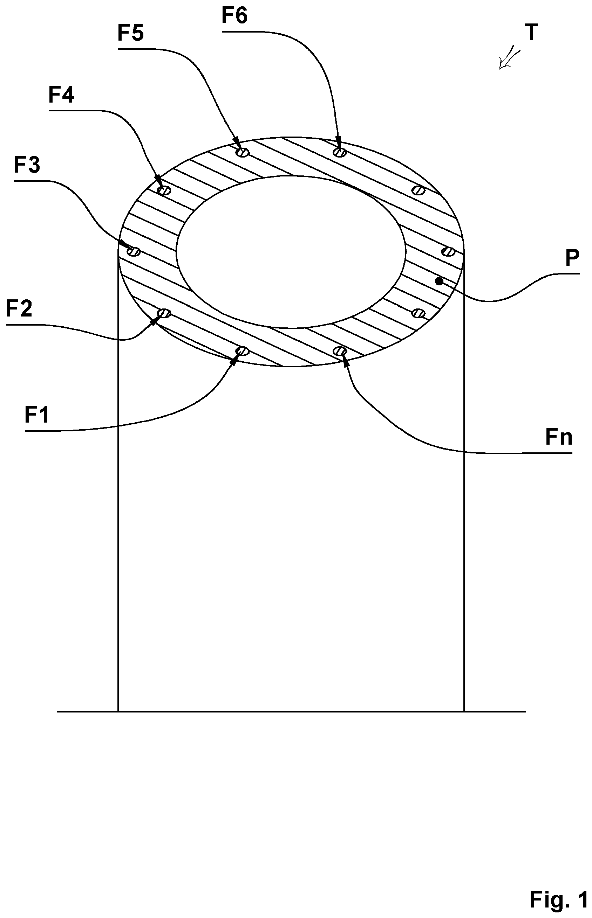

Figure 1 shows a sectional view of the new hose (T) comprising a tubular layer (P) made of a plastic or rubber or silicone material, which incorporates metal electrical conductors (F1, F2, ... Fn) arranged parallel to one another over the length of the hose (T) and evenly distributed along the circular cross-section of the hose (T).

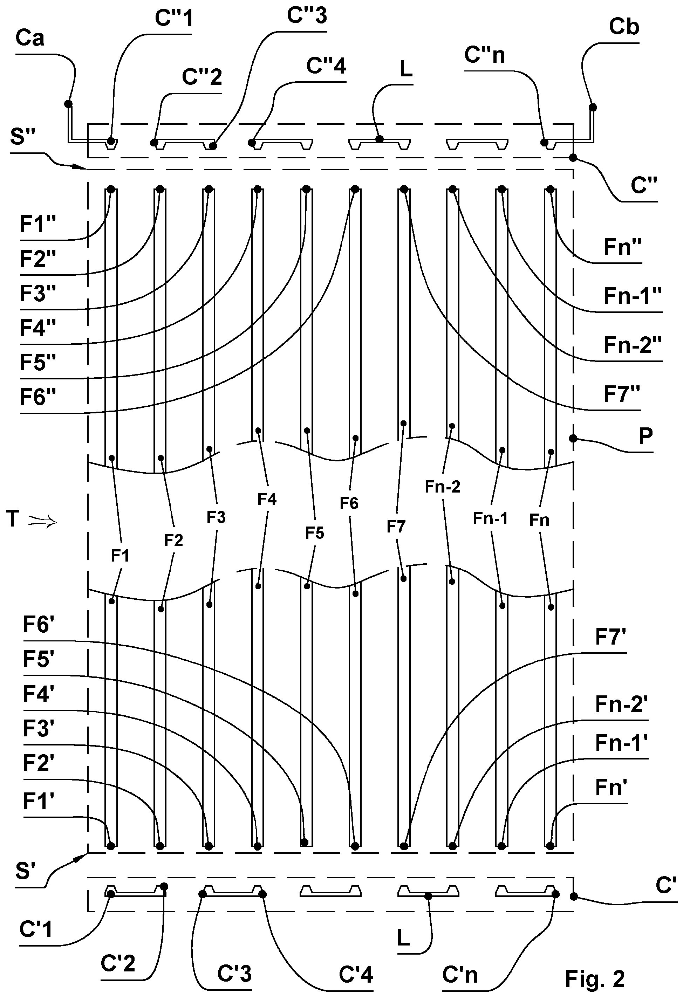

Figure 2 shows a schematic plan view of the plastic, silicone or rubber hose (T) representing by way of example how the electrical continuity of said metal conductors (F1, F2, ... Fn) is detected in order to identify any deterioration and imminent ruptures of the plastic, silicone or rubber tubular layer (P).

In Figure 2, the hose (T) is indicated with a broken line, while the metal conductors (F1, F2, ... Fn) are shown side by side.

In this example, said metal conductors (F1, F2, ... Fn) are even in number.

Two terminal elements (C', C"), shown in Figure 2 with a broken line and provided with electrical contacts (C'1, C'2, ...C'n; C"1, C"2, ... C"n), are arranged and applied at the two end sections (S', S") of the hose (T).

In particular, said electrical contacts (C'1, C'2, ... C'n; C"2, C"3 ... ) are suited to connect each pair of adjacent metal conductors (F1, F2, ...Fn) so that all said metal conductors (F1, F2, ...Fn) are connected to one another in series, while the terminal contacts (C"1 and C"n) are suited to be connected with the electrical continuity contacts (Ca, Cb).

In greater detail, in the example illustrated herein, the end (F2', F4', , ...Fn') of each metal wire (F2, F4, ... Fn) is electrically connected with the end (F1', F3', ...Fn-1'), on the same first section (S'), of an adjacent wire (F1, F3, .... Fn-1), while the end (F2", F4", .... ) on the second opposite section (S") of the same metal wire (F2, F4, ..) is electrically connected with the end (F3", F5", ...), on the second section (S"), of the adjacent wire (F3, F5, ... ).

By way of example:
- the first end (F2') of the second wire (F2) is electrically connected to the first end (F1') of the first wire (F1),
- the second end (F2") of the second wire (F2) is electrically connected to the second end (F3") of the third wire (F3),
- the first end (F3') of the third wire (F3) is electrically connected to the first end (F4') of the fourth wire (F4),
- the second end (F4") of the fourth wire (F4) is electrically connected to the second end (F5") of the fifth wire (F5), and so on.

On one (C") of the two terminal elements (C', C"), which are made of a non-conductive material, the ends (F1", Fn") of two conductors (F1, Fn) are not electrically connected to other wires (F) but are connected to two electrical contacts (Ca, Cb) suited to detect electrical continuity, in this example in series, between all metal conductors (F1, F2, ... Fn).

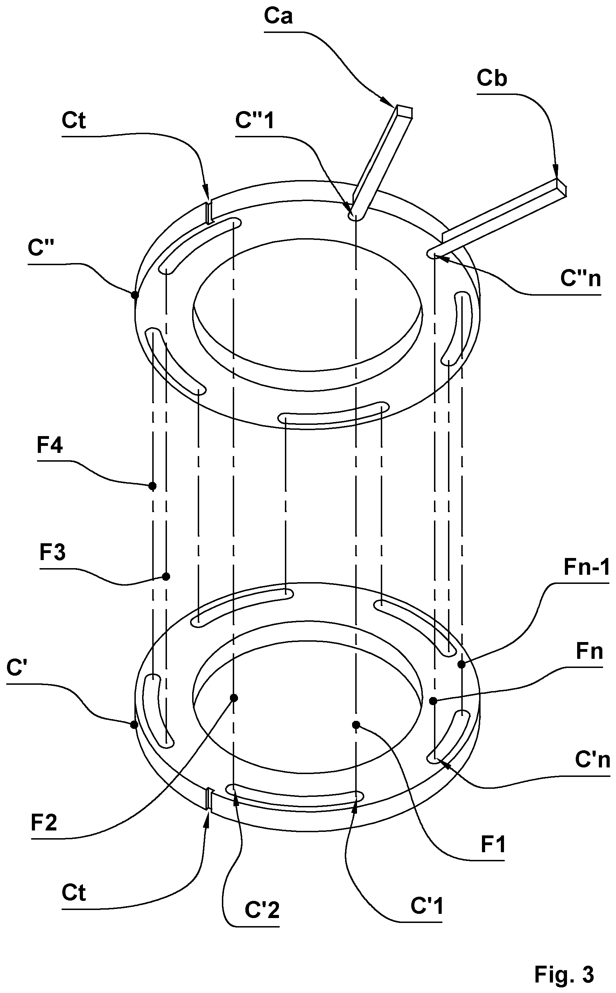

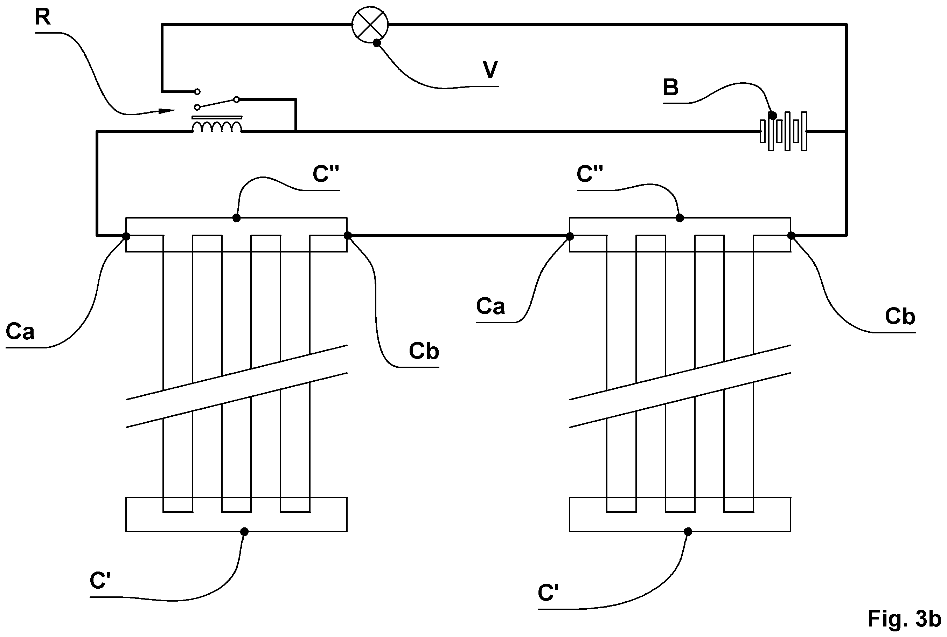

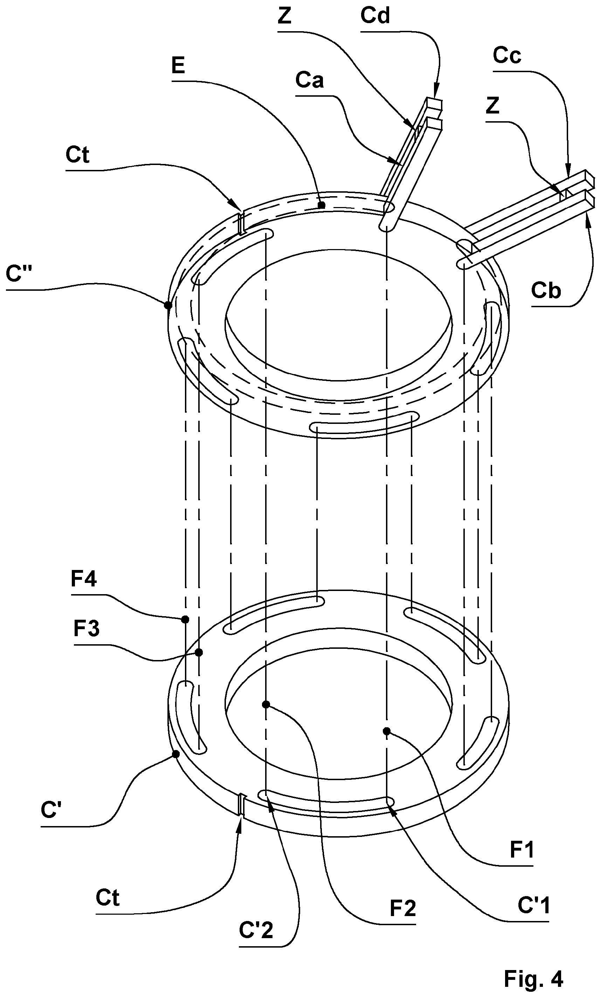

Figure 3 shows a simplified example of embodiment of said two terminal elements (C', C"), one of which (C") is shown in a rotated position, in which it is possible to observe:
- the alternating electrical connection between said metal conductors (F1, F2, ... Fn),
- the two electrical contacts (Ca, Cb) suited to detect electrical continuity.

In the example illustrated in Figure 3, it can also be seen that said terminal elements (C', C") are provided with a notch (Ct), groove or other feature that serves to correctly align the terminal elements (C', C") themselves with the new hose (T) and the related metal conductors (F1, F2, ... Fn), wherein a line or other sign for alignment is present on said hose (T).

Said two terminal elements (C', C") made of a non-conductive material can be housed in the metal or plastic end joint that is normally fixed to the ends of the plastic, silicone or rubber tubular layer (P) to complete the hose (T).

A suitable monitoring device continuously checks and detects the electrical continuity of the metal conductors (F1, F2, ...Fn) and, in the event that an interruption in electrical continuity due to the breakage of even a single metal wire (F1, F2, ...Fn) is detected, it signals the deterioration and the imminent rupture of the hose (T).

According to the invention, as shown in Figure 3b, the contacts (Ca, Cb) of one terminal element (C") can be connected in series with the identical contacts (Ca, Cb) of an identical terminal element (C") of another flexible hose (T).

In this way, said monitoring device can check the electrical continuity of the metal conductors (F1, F2, ... Fn) of two or more flexible hydraulic hoses (T) and signal the deterioration and imminent rupture of at least one of the flexible hydraulic hoses (T). For example, in Figure 3b, the first terminal (Ca) of a first flexible hose is connected to the electrical continuity detector while the second terminal (Cb) is connected to the first terminal (Ca) of another flexible hose (T) whose second terminal (Cb) is connected to the power source and the signalling device so as to close the circuit.

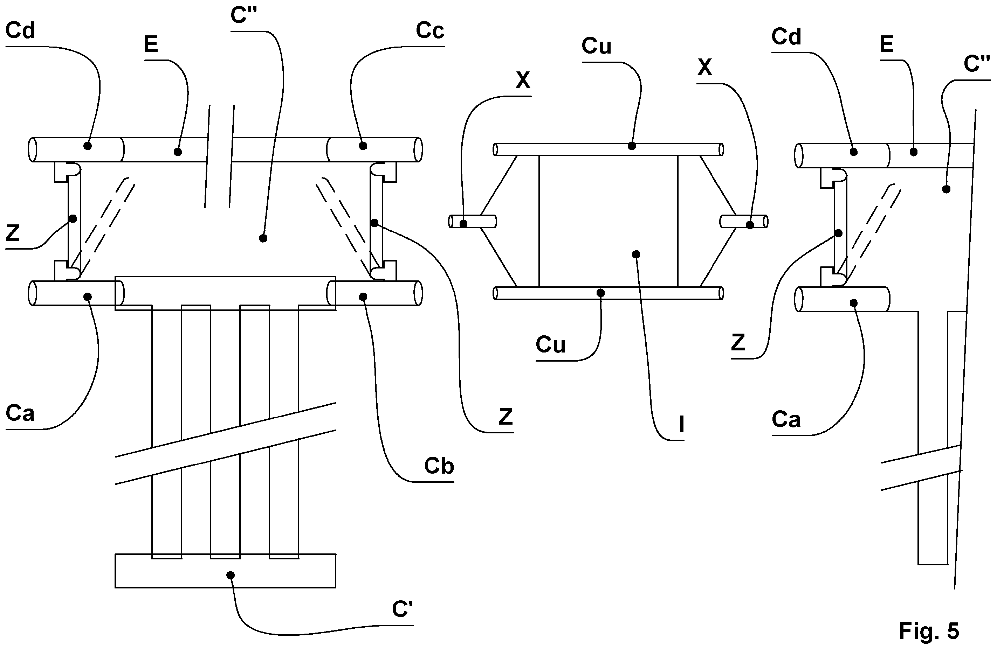

Figure 5 shows a schematic view of a possible series connection between several terminal elements, where the terminal element (C") generically comprises four contact points (Ca, Cb, Cc, Cd), one pair (Ca, Cb) of which is connected to the coil formed by the conductors (F) while the other pair (Cc, Cd) is directly connected by a conductor or bridge circuit (E).

According to the invention, therefore, the device described so far is electrically connected with a control system that includes light and/or sound sources suited to verify that electrical continuity is maintained and thus that the flexible hose is in a good state of maintenance.

According to the invention and as shown in Figure 5, a special intermediate connection element (I) can also be provided which, in addition to including contact points for the inputs and outputs of the related power lines (Ca, Cb, Cd, Cc,) also includes a device for opening (X) the electrical connections (Z) serving as bridges at the terminals.

Therefore, in order to make said electrical connection between several terminals (C") of the flexible hoses (T) and the power supply and control source of the device, said intermediate element (I) is provided, which is suited to ensure electrical continuity between one or two flexible hoses.

Said electrical connection element (Z) for the terminals (C") is normally closed in order to ensure said electrical continuity. Said intermediate element (I) is also equipped with an opening device (X), suited to translate said electrical connection element (Z) and thus cause the opening of the local electrical connection, in order to connect two or more flexible hoses to the same device suited to detect electrical continuity.

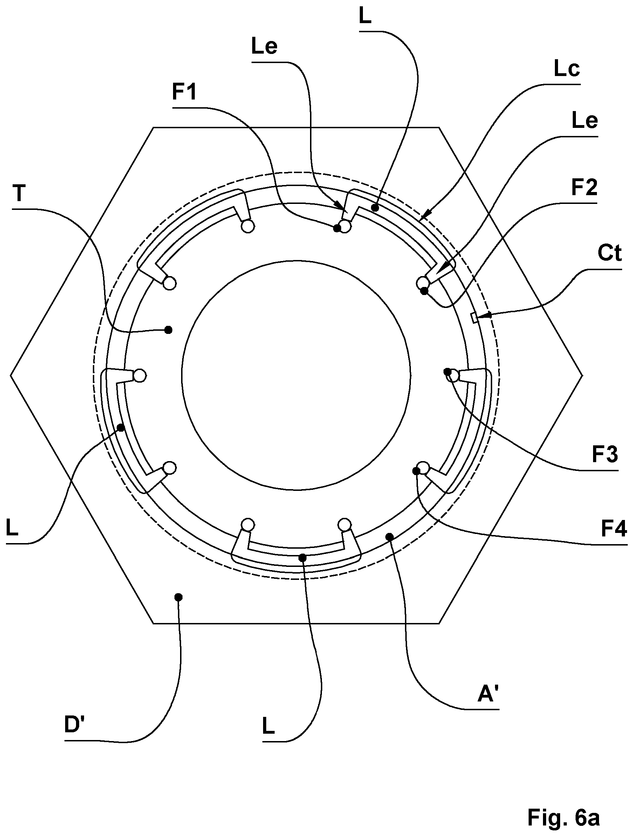

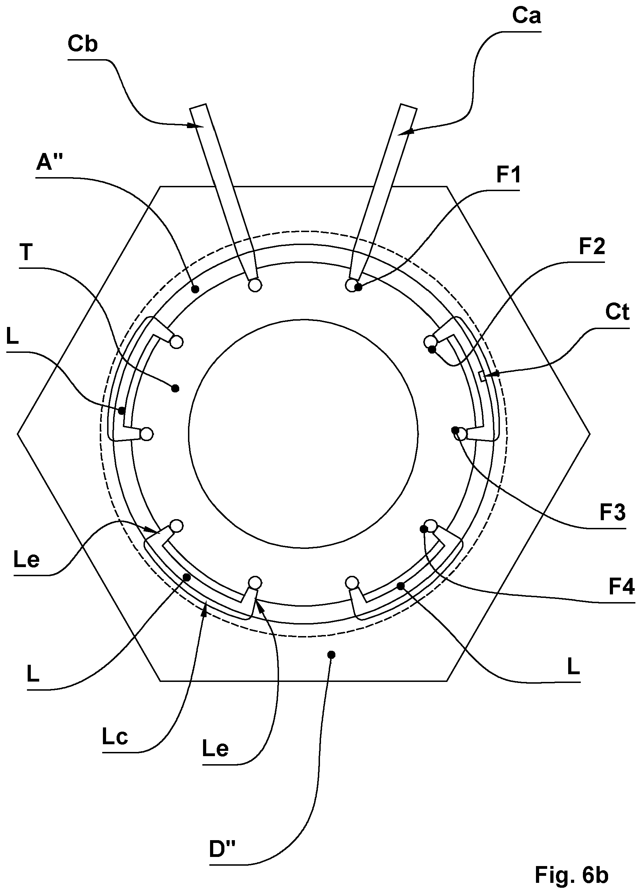

As shown in Figure 6, the invention also provides for an improved and more complete solution for the contacts (C'1, C'2, C'3... C"2, C"3), comprising laminar conductor elements (L) suited to be easily inserted in the outer part of the flexible pipe (T), in proximity to the terminal part of each wire. Said contacts, designed to electrically connect two conductors (F) positioned side by side, are placed orthogonally to the axis of the duct, that is, are orthogonal to the conductors, and are inserted into the flexible hose (T) until they come into contact with pairs of wires or conductors positioned side by side. Radial pressure for inserting said laminar connectors is exerted through a tightening element (D) which is screwed in, compressing said conductor elements towards the centre.

Figures 6a and 6b show a series of said laminar conductor elements (L) having a central section (Lc) and two extensions (Le) suited to come into contact with a pair of conductors positioned side by side (F1, F2....). On the outside of said laminar conductor elements (L) there is a ring (A', A") for containment, compression, connection, made of a non-conductive material.

A tightening element (D) in the form of a ring nut tightens said retaining ring (A', A") which, by compressing said laminar conductor elements (L) against the flexible hose (T), electrically connects the conductors (F1, F2, F3, ... Fn) so that electrical continuity among all the conductors of a flexible hose (T) is achieved thanks to said laminar conductor elements (L). In particular, Figure 6b shows the electrical contacts (Ca, Cb) suited to detect electrical continuity, which are also compressed by said tightening element (D").

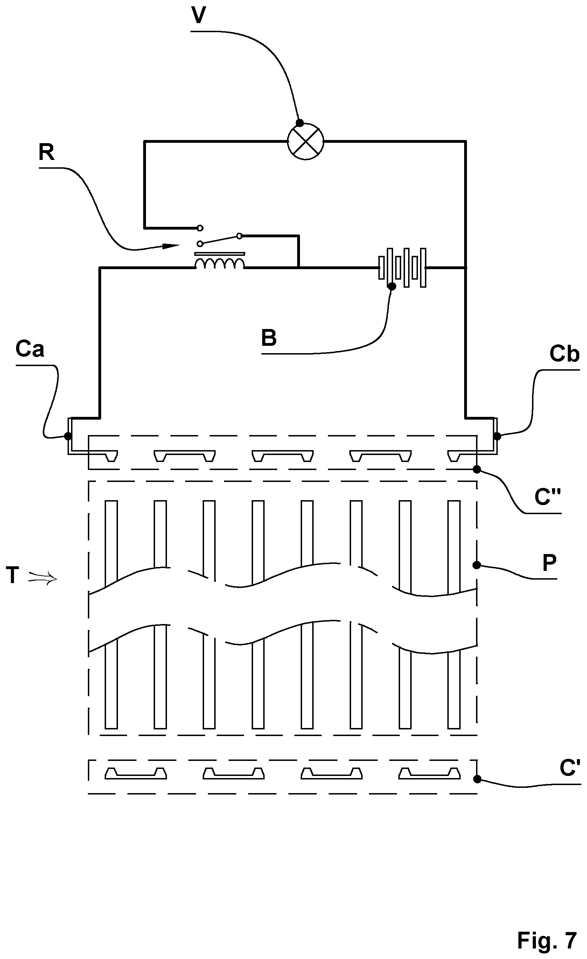

Figure 7 shows an example of continuity testing carried out using an electric current source (B), an indicator light (V) and a relay (R).

These are the schematic outlines that are sufficient for the expert in the art to carry out the invention, consequently, on practical application variants may be obtained that do not affect the substance of the innovative concept introduced herewith.

Therefore, with reference to the above description and the attached drawings, the following claims are made.

## Claims

1. Flexible hose (T) for fluids in general, comprising a tubular layer (P) made of plastic or rubber or silicone material, if necessary reinforced, **characterized in that** it comprises at least two or more metal electrical conductors (F1, F2, ...Fn) arranged parallel to one another and to the axis of said flexible hose (T), *and wherein* the interruption of at least one of said metal electrical conductors (F1, F2, ... Fn), in case of excessive expansion or cracking of the flexible hose, is suited to signal the deterioration and imminent rupture of the flexible hose (T) *and wherein* said metal electrical conductors (F1, F2, ... Fn) are arranged in proximity to the outer surface or on the outer surface of the flexible hose (T) itself.

2. Flexible hose (T) according to the preceding claim, **characterized in that** said flexible hose (T) comprises two or more concentric and joined tubular layers (P) made of plastic or rubber or silicone materials, *and wherein* said metal electrical conductors (F1, F2, ... Fn) are arranged on the outer surface or in proximity to the outer surface of the flexible hole (T) itself.

3. Flexible hose (T) according to the preceding claims, **characterized in that** said conductors are exposed in the cross section of the terminal parts of the flexible hose, *and wherein* two terminal elements (C', C") provided with electrical contacts (C'1, C'2, ...C'n; C"1, C"2, C"3...C"n) are suited to be arranged and applied at the ends of said flexible hose (T), in such a way that:
• one end (F2', F4', F6', ...Fn') of each electrical metal wire (F2, F4, F6...Fn) is electrically connected to the end (F1', F3', F5' ...Fn-1') of each adjacent electrical metal wire (F1, F3, F5...Fn-1), the other end (F2", F4", F6", ...Fn-2") of the same electrical metal wire (F2, F4, F6 ...Fn-2) is electrically connected to the end (F3", F5", F7"..Fn-1") of the successive electrical metal wire (F3, F5, F7....Fn-1), so that all said metal conductors (F1, F2, ...Fn) are connected to one another in series, achieving the electrical continuity of all the metal electrical conductors (F1, F2, ...Fn) of the flexible hose (T).

4. Flexible hose (T) according to the preceding claims, **characterized in that** at least one of said terminal elements (C', C") comprises electrical contacts (Ca, Cb) suited to detect the electrical continuity of all the metal electrical conductors (F1, F2, ...Fn) of the flexible hose (T), and wherein the end of the first wire (F1") is connected to an electrical contact (Ca) while the end of the last wire (Fn") is connected to a second electrical contact (Cb).

5. Flexible hose (T) according to the preceding claims, **characterized in that** said electrical contacts (Ca, Cb) of at least one of said terminal elements (C',C") are suited to be directly or indirectly connected in series to identical contacts (Ca, Cb) of identical terminal elements (C") of other flexible hoses (T), in such a way that, by means of a control device and a power source, it is possible to check the electrical continuity of the metal conductors (F1, F2, ...Fn) of two or more flexible hoses (T).

6. Flexible hose (T) according to the preceding claim, **characterized in that** it comprises an intermediate device (I) connecting said contact device (Cb) of a first terminal (C") with the contact device (Ca) of the adjacent terminal (C") and connecting said contact device (Cc) of said first terminal (C") with the contact device (Cd) of said adjacent terminal (C"), and at least one device suited to detect electrical continuity and at least one power source.

7. Flexible hose (T) according to the preceding claim, **characterized in that** said intermediate device (I) comprises electrical connections (Cu) between said contact devices (Cb, Ca) and said return contact devices (Cc, Cd) of said terminal elements (C").

8. Flexible hose (T) according to the preceding claim, **characterized in that** said terminal elements (C") comprise electrical bridge connection elements (Z) between the return contact devices (Cc, Cd) and said electrical contacts (Ca, Cb).

9. Flexible hose (T) according to the preceding claims, **characterized in that** said intermediate device (I), in addition to including the inputs and outputs of the related electrical lines (Cu), also comprises an opening device (X) suited to open said bridge connection elements (Z) present on the terminals (C") between the return contact devices (Cc, Cb) and the devices (Ca, Cd).

10. Flexible hose (T) according to the preceding claim, **characterized in that** it comprises laminar conductor elements (L) suited to be inserted in the sheath part close to the terminal parts, each suited to electrically connect two conductors placed side by side, *and wherein* said laminar conductor elements (L) are positioned orthogonally to the axis of the flexible hose (T), that is, they are orthogonal to the metal conductors (F) and partially inserted in the flexible hose (T) until they come into contact with pairs of conductors (F1,F2,F3, ... Fn) positioned side by side.

11. Flexible hose according to the preceding claim, **characterized in that** it comprises at least one first and one second ring (A', A") made of a non-conductive material and intended to support said laminar conductor elements (L) and the related tightening elements (D', D") which are in the shape of a ring nut, preferably made of a non-conductive material and suited to exert a radial pressure on said first and second rings (A', A") and on said laminar conductor elements (L), said pressure being intended to completely or partially insert said laminar conductor elements (L) in the flexible hose (T), electrically connecting said electrical conductors (F1, F2, F3, ... Fn) with said laminar conductor elements (L) and achieving electrical continuity among all the electrical conductors of a flexible hose (T).

12. Flexible hose (T) according to the preceding claim, **characterized in that** during the tightening operation said second ring (A") made of a non-conductive material exerts a radial pressure also on said electrical contacts (Ca, Cb, Cc, Cd) suited to detect the electrical continuity of all the metal electrical conductors (F1, F2, ... Fn) of the flexible hose (T) and with the control circuit, so that, through a control device and a power source, it is possible to verify the electrical continuity of the metal conductors (F1, F2, ...Fn) of two or more flexible hoses (T).

13. Flexible hose according to the preceding claim, **characterized in that** said terminal elements (C', C") are provided with a notch (Ct), groove or other feature that serves to correctly align the terminal elements (C', C") themselves with said flexible hose (T) and the related metal conductors (F1, F2, ... Fn), wherein a line or other sign for alignment is present on said flexible hose (T).

14. Flexible hose according to claims 1...15, **characterized in that** for the purpose of verifying the electrical continuity of the metal conductors (F1, F2, ... Fn) of the flexible hose (T), it comprises a lighting body connected in series to said electrical contacts (Ca, Cb) and with an electrical device suited to keep said lighting body switched off in the presence of current and to switch it on in the absence of current.
